(19) Europäisches Patentamt
European Patent Office
Office européen des brevets

(11) **EP 3 553 728 A1**

(12) **EUROPEAN PATENT APPLICATION**

(43) Date of publication:
**16.10.2019 Bulletin 2019/42**

(51) Int Cl.:
***G06Q 30/02*** *(2012.01)*

(21) Application number: **18167090.2**

(22) Date of filing: **12.04.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Schweiz AG
8047 Zürich (CH)**

(72) Inventors:
• **Dhungana, Deepak
2201 Seyring (AT)**
• **Debrot, Alain
6340 Baar (CH)**
• **Ehlmaier, Max Paul
1120 Wien (AT)**

(74) Representative: **Maier, Daniel Oliver
Siemens AG
Postfach 22 16 34
80506 München (DE)**

(54) **RECOMMENDATION ENGINE**

(57) The invention is related to a Recommendation engine for the evaluation of Offerings in a procurement process and the generation of a selection of the Offerings wherein
- the relationship between Offerings and the procurers requirements is modeled in matrices

- based on the matrices, vector representations for the Offerings are generated
- similarity values are calculated for the Offerings
- based on the similarity values a selection and ranking of the Offerings is provided.

FIG 1

**Description**

Field of the invention

The invention is related to a Recommendation engine for the evaluation of Offerings in a procurement process and the generation of a selection of the Offerings.

Background

Recommendation engines or recommender systems are a subclass of information filtering systems that seek to predict the "rating" or "preference" that a user would give to an item.

In other words, such systems analyze available data to make suggestions for something that a website user might be interested in, such as a service, or a device.

According to the state of the art two basic principles are used for recommendation systems:

Collaborative filtering, also referred to as social filtering, filters information by using the recommendations of other people. It is based on the idea, that people who agreed in their evaluation of certain items in the past are likely to agree again in the future. A person who wants to see a movie for example, might ask for recommendations from friends. The recommendations of some friends who have similar interests are trusted more than recommendations from others. This information is used in the decision on which movie to see. Collaborative filtering is often based on matrix factorization techniques.

However, collaborative filtering is not applicable when data about other users and their preferences is missing.

The second basic principle of content-based filtering is based on a description of the item and a profile of the user's preference. In a content-based recommender system, keywords are used to describe the items and a user profile is built to indicate the type of item this user prefers. In other words, these algorithms try to recommend items that are similar to those that a user chose in the past. In particular, various candidate items are compared with items previously rated by the user and the best-matching items are recommended.

Apart from recommendation engines, there are also techniques from the world of product configuration known, that solve related problems, as for example the so called "guided selling", which is a process that helps potential buyers of products or services to choose the product best fulfilling their needs and hopefully guides the buyer to buy.

It also helps vendors of products in to actively guide their customers in a procurement process to a decision. Typically, guided procurement approaches are implemented constraint satisfaction problems. The boolean satisfiability problem, the satisfiability modulo theories and answer set programming can be roughly thought of as certain forms of the constraint satisfaction problem.

Although this approach seems to solve the described problem in the first glance, the challenge of recommending products based on a calculated relevance ranking for the items is not solved by constraint satisfaction problems. The solution generated by such solvers is typically a true or false decision meaning that either a product or service is well suited for the customer or it is forbidden by the constraints. In our case, the customer should also be able to select elements, that may seem to be counter intuitive for the recommendation engine, i.e., the customer decides and the recommendation engine must follow his behavior pattern.

It is therefore a goal of the present invention to provide an improved recommendation engine, which overcomes the above mentioned disadvantages.

Summary

The object of the invention is achieved by claim 1. The dependent claims describe advantageous developments and modifications of the invention.

With the consideration of high level customer goals and project context data, the recommendation engine provides optimized results, the recommendations reflect the demands of the customer in an optimal way.

Brief Description of the drawings

Fig. 1 shows an overview of the method according to the invention
Fig. 2 shows schematic the handling of "static data"
Fig. 3 shows an example of an availability matrix for a preferred embodiment.
Fig. 4 shows an example of a so called utility matrix for a preferred embodiment
Fig.5 shows an example for a project context matrix

Fig.6 shows the input data for exemplary customer motivators
Fig.7 shows an example of an user interaction matrix
Fig.8 shows the vector representation of an exemplary application of the invention
Fig.9 shows an schematic illustration of an embodiment the invention

Description of the drawings

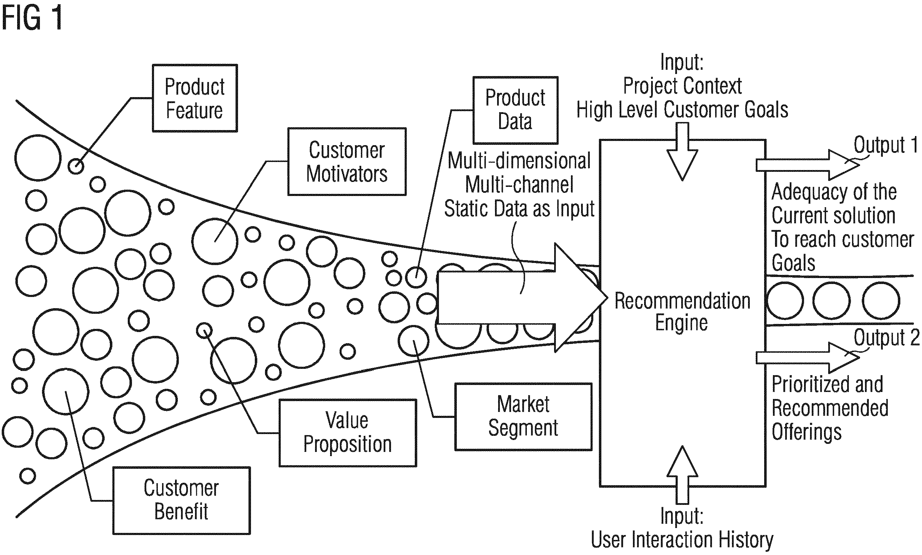

As shown in Figure 1, the invented recommendation engine deals with three types of input:

- static data in the form of product features, customer pain points, customer values/benefits, market information like the market segment or even the different kinds of customer profiles.
- customer data (project context) in the form of the type of market that is being considered at the moment or the benefits that are of high importance for the customer.
- user interaction data in the form of the Offerings that are being selected by the customer in the current configuration project.

The output of the engine is then a set of Offerings, matching the customer profile and related to the previous selections of the customer, contributing to the benefits which the customer wishes to get. Additionally, the system calculates how well the customer target to reach a certain high level goal has been met.

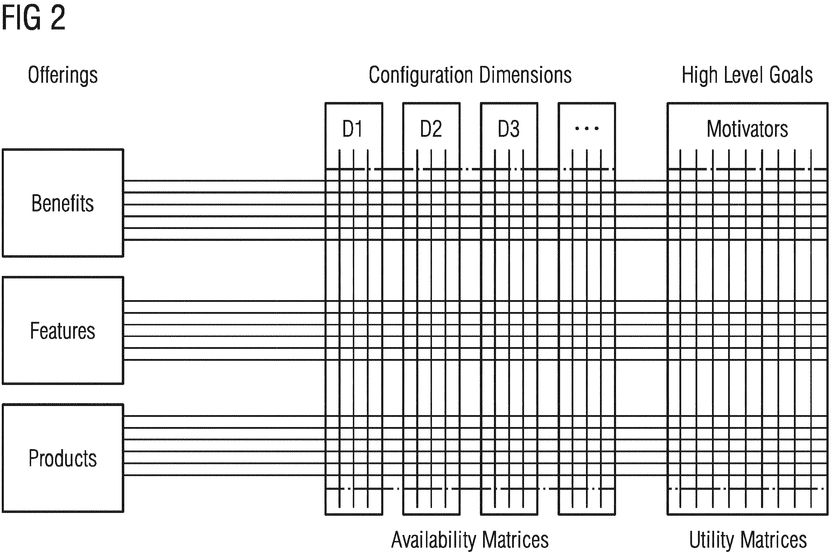

As shown in Fig. 2 the actual Offerings (e.g., product features, customer benefits and the products) for a certain distribution project are statically modeled. The configuration dimensions represent the criteria for the variation points in the Offerings. The high level goals represent the customer motivators to buy a solution in any given domain.

The relationship between Offerings and configuration dimensions is modeled in Boolean matrices - so called availability matrices. The relationship between Offerings and high level goals is modeled in the form of utility matrices - a good way of representing quantified information about the relationships between elements. The value of in each cell of the matrix - representing the relationship between a certain Offering and a high level goal - specifies the degree of impact of the Offering on a certain high level goal of the user.

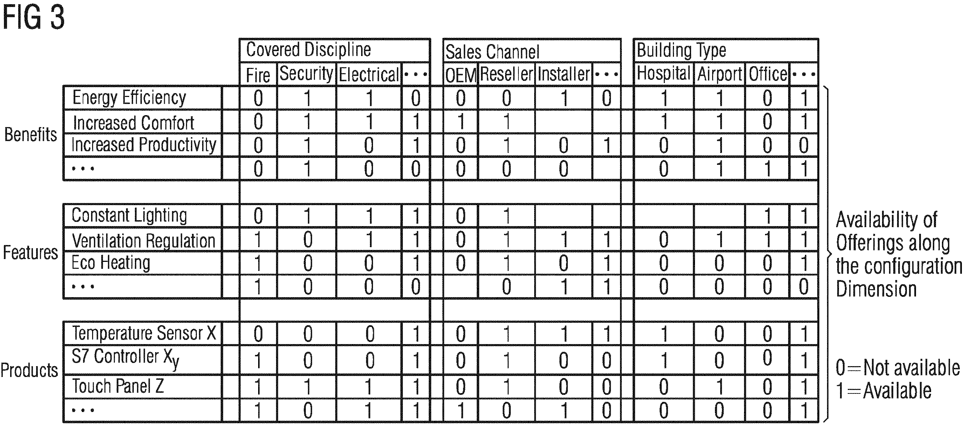

Fig. 3 shows an exemplary availability matrix for the use of the invention in a distribution project for a building automation solution.

Example products in this case can be automation controllers, sensors, touch panels etc.

Example features could be "constant lighting", "automated ventilation regulation" etc.

Example benefits for the customers can be "increased productivity", "energy efficiency" etc. Some configuration dimensions could be the covered discipline (e.g., Fire, Security, and Electrical), the addressed distribution channel, the building type that is being considered (e.g., Hospital, Airport, Office building etc.).

The value in each cell of the matrix 0 or 1 indicates the availability of a certain "Offering" for a "Configuration Dimension".

In a preferred embodiment the cells of the matrix are prefilled with 0, so that it is only necessary to fill in values in cells where a certain "Offering" is available for a "Configuration Dimension".

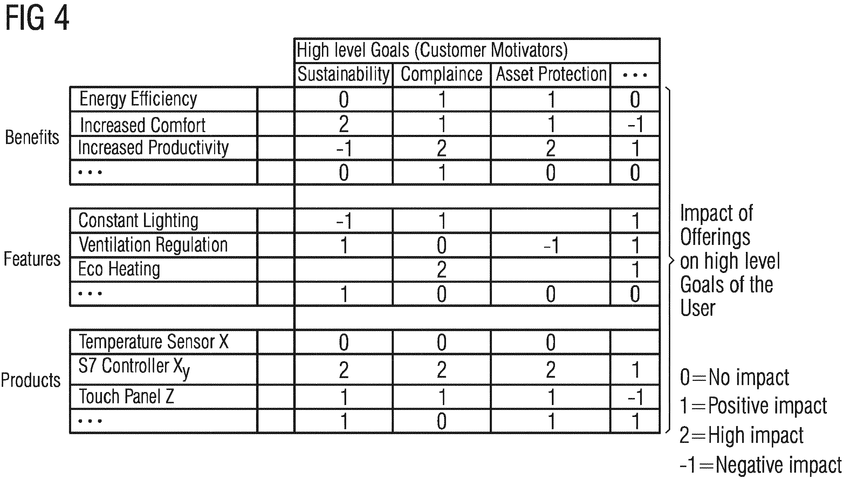

Fig. 4 shows an example of an utility matrix for the above mentioned distribution project for a building automation solution.

As the relationship between "Offerings" and "High Level Goals" is more complex than the availability of "Offerings" for "Configuration Dimension", the values in the cells of the utility matrix have a broader range, in the present example from -1 for a negative impact to 2 for a high impact.

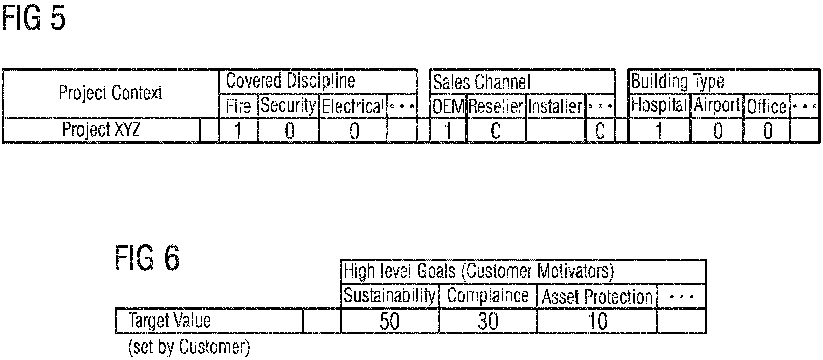

Figures 5, 6 show the exemplary handling of "customer data".

In Fig. 5 an exemplary matrix for the definition of the project context by selecting one or more elements from the configuration dimension is shown. For example, the customer may be looking for a solution in the "fire" discipline, considering the possibilities of a OEM and targeting a hospital building (Building type).

Fig. 6 shows exemplary a matrix for typical customer motivators, that is to say soft facts, as sustainability, Complaince and asset protection to prefer a certain solution. In the present embodiment the customer has set the target value for "Sustainability" to be 50, for "Complaince" to be 30 etc.

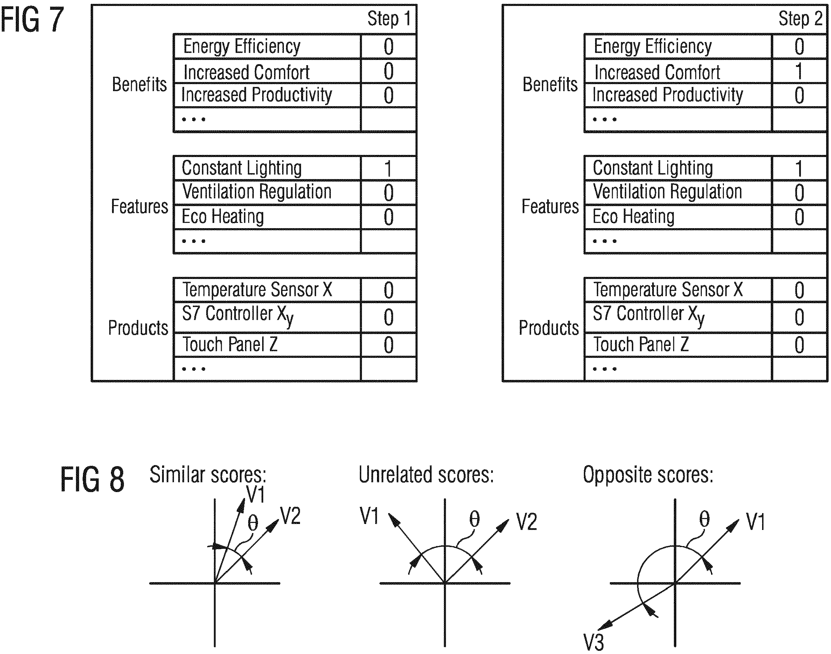

Fig. 7 shows a user interaction matrix, in which the history of the User Interaction is recorded. According to the invention, his data will also be taken into account for the recommendations.

Based on the data in the matrices, each "Offering" is represented as an m-dimensional vector, where each dimension corresponds to a distinct configuration dimension and m is the size of the union set of all possible values of the configuration dimension.

Afterwards, the similarity of different Offerings, respectively their vector representation V1 to the vector representing the customers targets V2 is calculated.

Fig. 8 shows three different examples for the similarity between two vectors V1, V2, similar, unrelated and opposite scores.

In the present embodiment Cosine similarity is used, which is a measure of similarity between two non-zero vectors of an inner product space that measures the cosine of the angle between them. The cosine of 0° is 1, and it is less than 1 for any other angle. It is thus a judgment of orientation and not magnitude: two vectors with the same orientation have a cosine similarity of 1, two vectors at 90° have a similarity of 0, and two vectors diametrically opposed have a similarity of -1, independent of their magnitude.

In detail, the similarity between two Vectors especially between Project Context Vector and an Offering Vector is calculated as

$$\text{similarity} = \cos(\theta) = \frac{A \cdot B}{\|A\|\|B\|} = \frac{\sum_{i=1}^{n} A_i \times B_i}{\sqrt{\sum_{i=1}^{n} (A_i)^2} \times \sqrt{\sum_{i=1}^{n} (B_i)^2}}$$

Using cosine similarity measures, it is possible to create a map of the Offerings - clearly showing how similar they are to the customers needs as defined in the configuration dimension.

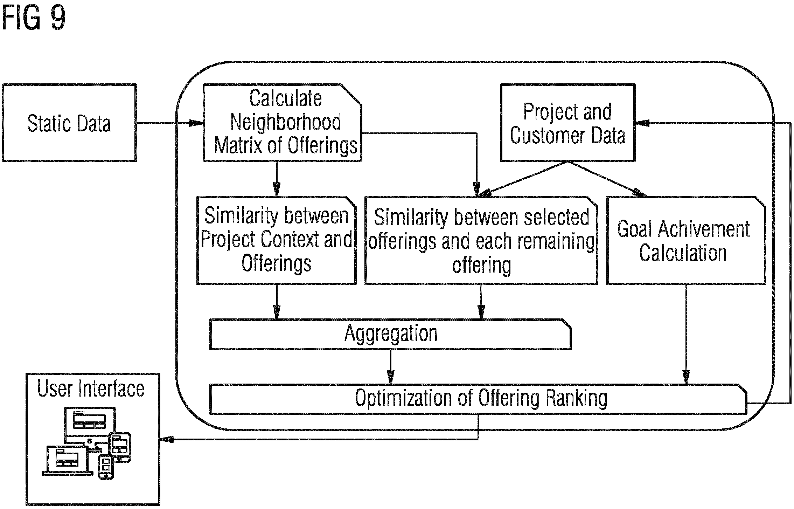

Fig.9 shows a flowchart of an exemplary recommendation process.

In a first step neighborhood matrices of Offerings are prepared. For each Offering, its distance to the customers targets in the given vector space model is calculated and stored in the matrix.

In order to optimize the performance of the system, it may be advantageous to pre-compute the neighborhood matrix and in some cases the so called project context matrix before the user starts interacting with the system.

In a next step project context information is exploited. The project context can also be represented as a vector in the vector space model, as it represents a selection of elements in the configuration dimension.

In a third step, the interaction history of the user is exploited.

As the user continues with the selection of further Offerings, the recommendation engines gets more input about the "taste" of the user and can recommend items based on the previous selections. In order to do this, the current user selection is represented as a vector and the rating of the remaining Offerings is calculated as a weighted mean of the similarity coefficient of selected elements - which is available in the neighborhood matrix.

In a fourth step, the scores of step 1 and step 2 are aggregated.

To get fair results, the scores calculated based on the project context information and the interaction history of the user are aggregated. A simple form of aggregation would be to calculate the average of the two. But different weights maybe assigned to the individual results to specify the priorities, before a weighted average is calculated.

In step 5 the achievement of the high level goals of the customer is calculated.

Based on the current selection of the Offerings, the system is able to calculate the achieved value for each high level goal (customer motivator). This value is calculated as a weighted average of the impact of the Offering on the high level goal - the data come from the utility matrix.

In step 6 the Offering ranking is optimized.

Based on the difference between the target value of a high level goal and the calculated (achieved) value of the same goal in the current project settings, the system is then able to recommend the Offerings that would maximize the achievement of the high level customer goal.

Step 7: presentation of the result to the user.

While the invention has been illustrated and described in detail with the help of a preferred embodiment, the invention is not limited to the disclosed examples. Other variations can be deducted by those skilled in the art without leaving the scope of protection of the claimed invention.

## Claims

1. Recommendation engine for the evaluation of Offerings in a procurement process and the generation of a selection of the Offerings wherein

   - the relationship between Offerings and the procurers requirements is modeled in matrices
   - based on the matrices, vector representations (V1, V2) for the Offerings are generated
   - similarity values are calculated for the Offerings
   - based on the similarity values a selection and ranking of the Offerings is provided.

**2.** Recommendation engine according to claim 1 wherein the procurers requirements conclude static data e.g. product features, project context data and user interaction data.

**3.** Recommendation engine according to claim 1 or 2 wherein the matrices conclude an avaibility matrix for the modeling of the relationship between Offerings and configuration dimensions.

**4.** Recommendation engine according to one of claims 1 to 3 wherein the matrices conclude an utility matrix for the modeling of the relationship between Offerings and high level goals.

**5.** Recommendation engine according to one of claims 1 to 4 wherein the matrices conclude at least one matrix for the modeling of the relationship between Offerings and project context data.

**6.** Recommendation engine according to one of claims 1 to 5 wherein Cosine similarity is used.

# FIG 1

- Product Feature
- Customer Motivators
- Product Data
- Input: Project Context High Level Customer Goals

Multi-dimensional Multi-channel Static Data as Input

Recommendation Engine

Output 1

Adequacy of the Current solution To reach customer Goals

Output 2

Prioritized and Recommended Offerings

- Value Proposition
- Market Segment
- Customer Benefit

Input: User Interaction History

EP 3 553 728 A1

# FIG 2

Offerings          Configuration Dimensions        High Level Goals

| D1 | D2 | D3 | · · · | Motivators |

Benefits

Features

Products

Availability Matrices         Utility Matrices

EP 3 553 728 A1

# FIG 3

EP 3 553 728 A1

| | | Covered Discipline | | | | Sales Channel | | | | Building Type | | | |
|---|---|---|---|---|---|---|---|---|---|---|---|---|---|
| | | Fire | Security | Electrical | ··· | OEM | Reseller | Installer | ··· | Hospital | Airport | Office | ··· |
| **Benefits** | Energy Efficiency | 0 | 1 | 1 | 0 | 0 | 0 | 1 | 0 | 1 | 1 | 0 | 1 |
| | Increased Comfort | 0 | 1 | 1 | 1 | 1 | 1 | | | 1 | 1 | 0 | 1 |
| | Increased Productivity | 0 | 1 | 0 | 1 | 0 | 1 | 0 | 1 | 0 | 1 | 0 | 0 |
| | ··· | 0 | 1 | 0 | 0 | 0 | 0 | 0 | | 0 | 1 | 1 | 1 |
| **Features** | Constant Lighting | 0 | 1 | 1 | 1 | 0 | 1 | | | | | 1 | 1 |
| | Ventilation Regulation | 1 | 0 | 1 | 1 | 0 | 1 | 1 | 1 | 0 | 1 | 1 | 1 |
| | Eco Heating | 1 | 0 | 0 | 1 | 0 | 1 | 0 | 1 | 0 | 0 | 0 | 1 |
| | ··· | 1 | 0 | 0 | 0 | | 0 | 1 | 1 | 0 | 0 | 0 | 0 |
| **Products** | Temperature Sensor X | 0 | 0 | 0 | 1 | 0 | 1 | 1 | 1 | 1 | 0 | 0 | 1 |
| | S7 Controller $X_y$ | 1 | 0 | 0 | 1 | 0 | 1 | 0 | 0 | 1 | 0 | 0 | 1 |
| | Touch Panel Z | 1 | 1 | 1 | 1 | 0 | 1 | 0 | 0 | 0 | 1 | 0 | 1 |
| | ··· | 1 | 0 | 1 | 1 | 1 | 0 | 1 | 0 | 0 | 0 | 0 | 1 |

Availability of Offerings along the configuration Dimension

0 = Not available
1 = Available

# FIG 4

| | High level Goals (Customer Motivators) | | | |
| --- | --- | --- | --- | --- |
| | Sustainability | Complaince | Asset Protection | ... |
| **Benefits** | | | | |
| Energy Efficiency | 0 | 1 | 1 | 0 |
| Increased Comfort | 2 | 1 | 1 | -1 |
| Increased Productivity | -1 | 2 | 2 | 1 |
| ... | 0 | 1 | 0 | 0 |
| **Features** | | | | |
| Constant Lighting | -1 | 1 | | 1 |
| Ventilation Regulation | 1 | 0 | -1 | 1 |
| Eco Heating | | 2 | | 1 |
| ... | 1 | 0 | 0 | 0 |
| **Products** | | | | |
| Temperature Sensor X | 0 | 0 | 0 | |
| S7 Controller $X_y$ | 2 | 2 | 2 | 1 |
| Touch Panel Z | 1 | 1 | 1 | -1 |
| ... | 1 | 0 | 1 | 1 |

Impact of Offerings on high level Goals of the User

0 = No impact
1 = Positive impact
2 = High impact
-1 = Negative impact

# FIG 5

| Project Context | Covered Discipline | | | | Sales Channel | | | | Building Type | | | |
|---|---|---|---|---|---|---|---|---|---|---|---|---|
| | Fire | Security | Electrical | · · · | OEM | Reseller | Installer | · · · | Hospital | Airport | Office | · · · |
| Project XYZ | 1 | 0 | 0 | | 1 | 0 | | 0 | 1 | 0 | 0 | |

# FIG 6

| | High level Goals (Customer Motivators) | | | |
|---|---|---|---|---|
| | Sustainability | Complaince | Asset Protection | · · · |
| Target Value | 50 | 30 | 10 | |

(set by Customer)

# FIG 7

**Step 1**

| Benefits | | |
|---|---|---|
| | Energy Efficiency | 0 |
| | Increased Comfort | 0 |
| | Increased Productivity | 0 |
| | ... | |

| Features | | |
|---|---|---|
| | Constant Lighting | 1 |
| | Ventilation Regulation | 0 |
| | Eco Heating | 0 |
| | ... | |

| Products | | |
|---|---|---|
| | Temperature Sensor X | 0 |
| | S7 Controller $X_y$ | 0 |
| | Touch Panel Z | 0 |
| | ... | |

**Step 2**

| Benefits | | |
|---|---|---|
| | Energy Efficiency | 0 |
| | Increased Comfort | 1 |
| | Increased Productivity | 0 |
| | ... | |

| Features | | |
|---|---|---|
| | Constant Lighting | 1 |
| | Ventilation Regulation | 0 |
| | Eco Heating | 0 |
| | ... | |

| Products | | |
|---|---|---|
| | Temperature Sensor X | 0 |
| | S7 Controller $X_y$ | 0 |
| | Touch Panel Z | 0 |
| | ... | |

# FIG 8

Similar scores: V1, V2, $\theta$

Unrelated scores: V1, V2, $\theta$

Opposite scores: V1, $\theta$, V3

EP 3 553 728 A1

# FIG 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 014 587 A1 (NUUKIK [FR]; INST NAT RECH INF AUTOMAT [FR]; UNIV LILLE 3 [FR]) 12 June 2015 (2015-06-12) * abstract * * page 1, line 3 - page 11, line 2 * * page 11, line 16 - page 19, line 25 * * figures 1-5 * | 1-6 | INV. G06Q30/02 |
| X | WO 2009/021198 A1 (BAYNOTE INC [US]; BRAVE SCOTT [US]; JIA JACK [US]) 12 February 2009 (2009-02-12) * abstract * * page 1, line 16 - page 7, line 10 * * page 10, line 13 - page 48, line 29 * * figures 1-3,6-12,27-30 * | 1-6 | |

TECHNICAL FIELDS
SEARCHED      (IPC)

G06Q

The present search report has been drawn up for all claims

| Place of search | Date of completion of the search | Examiner |
|---|---|---|
| The Hague | 23 May 2018 | Bassanini, Anna |

EPO FORM 1503 03.82 (P04C01)

## ANNEX TO THE EUROPEAN SEARCH REPORT
## ON EUROPEAN PATENT APPLICATION NO.

EP 18 16 7090

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | | Publication date | Patent family member(s) | | Publication date |
|---|---|---|---|---|---|
| FR 3014587 | A1 | 12-06-2015 | FR | 3014587 A1 | 12-06-2015 |
| | | | WO | 2015086960 A1 | 18-06-2015 |
| WO 2009021198 | A1 | 12-02-2009 | CN | 101779180 A | 14-07-2010 |
| | | | EP | 2176730 A1 | 21-04-2010 |
| | | | JP | 2010536102 A | 25-11-2010 |
| | | | US | 2009037355 A1 | 05-02-2009 |
| | | | US | 2012311139 A1 | 06-12-2012 |
| | | | WO | 2009021198 A1 | 12-02-2009 |

EPO FORM P0459

For more details about this annex : see Official Journal of the European Patent Office, No. 12/82